# EUROPÄISCHE PATENTSCHRIFT

(11) **EP 1 870 003 B1**
(45) Veröffentlichungstag und Bekanntmachung des Hinweises auf die Patenterteilung: **19.11.2008**
(21) Anmeldenummer: 07009355.4
(22) Anmeldetag: 09.05.2007
(51) Int. Cl.: A47J 31/44

(54) **Milchaufschäumvorrichtung**
Device for whipping milk
Dispositif pour émulsifier du lait

(30) Priorität: 22.06.2006 DE 202006009786 U
(43) Veröffentlichungstag der Anmeldung: 26.12.2007
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 1 639 925
- EP-B1- 1 344 477

## Beschreibung

Die vorliegende Erfindung betrifft eine Milchaufschäumvorrichtung mit einer Mischkammer, die stromabwärts einer Dampfzuleitung angeordnet ist und die mit einer Milch- und/oder Milch-Luft-Zuleitung in Verbindung steht, und einer stromabwärts der Milchkammer angeordneten Auslasseinrichtung für das Gemisch, die mehrere Auslasskanäle aufweist.

Eine solche Vorrichtung ist z.B. aus der DE 20204085 U1 bekannt. Dort wird das Milch-Luft-Gemisch in die Milchkammer eingeleitet und dort mit Dampf vermischt. Unmittelbar im Anschluss an die Mischkammer ist eine Beruhigungsstrecke aus mehreren strömungsmäßig parallelen Beruhigungskanälen angeordnet, die an einem offenen Ende jeweils eine Abgabeöffnung zur Abgabe eines Milchschaumstroms nach außen bilden. Gemäß der zugehörigen EP 1344477 B1 soll der lichte Durchmesser des Querschnitts jeder dieser Beruhigungskanäle in einem Verhältnis zu dessen Länge dimensioniert sein, dass 1 zu mindestens 10, insgesamt geteilt durch die Anzahl der Beruhigungskanäle ist. Aufgrund im Querschnitt relativ kleiner aber sehr langer Beruhigungskanäle soll verhindert werden, dass das Dampf-Luft-Milchgemisch möglichst gleichmäßig aus der Vorrichtung ausfließt und keine Spritzer entstehen. Der Nachteil besteht allerdings darin, dass die Kanäle im Querschnitt relativ klein aber relativ lang sind, wodurch eine stetige Reinigung notwendig ist. Ansonsten setzen sich die Kanäle sehr schnell mit anhaftendem Milcheiweiß zu. Darüber hinaus führt die relativ lang ausgebildete Beruhigungsstrecke auch zur Ausgestaltung einer relativ langen Aufschäumvorrichtung.

Weitere Maßnahmen zur Beruhigung des aus der Mischkammer austretenden Dampf-Luft-Milchgemischs sind in der EP 0858757 B1 und der EP 1115317 B1 beschrieben.

Der vorliegenden Erfindung liegt die Aufgabe zugrunde, eine Milchaufschäumvorrichtung der eingangs genannten Art so zu verbessern, dass durch einfache Maßnahmen ein gleichmäßiger und gerichteter Milchschaumstrom abgegeben wird.

Diese Aufgabe wird erfindungsgemäß dadurch gelöst, dass die Auslassöffnung eines Auslasskanals in einem Winkel zur Querschnittsebene des Auslasskanals geneigt ist. Das durch den Auslasskanal strömende Schaumgemisch reißt beim Austritt an einigen Stellen des Auslasskanals früher von der Kanalwandung ab als an anderen Stellen, wodurch dem Strömungsstrahl eine vorbestimmte Ablenkung beim Austritt aufgeprägt werden kann. Das bedeutet auch, dass zumindest ein Abschnitt eines Auslasskanals oberhalb zumindest eines anderen Abschnitts desselben Auslasskanals endet. Aufgrund gezielter Strahlablenkung lassen sich die durch die Auslasskanäle ausströmenden Teilstrahle z.B. gezielt zusammenführen, so dass ein gleichmäßiger, spritzfreier Gesamtstrahl entsteht. Andererseits könnte auch eine Gesamtstrahlaufweitung erfolgen oder dem Strahl ein Drall aufgeprägt werden. Der Neigungswinkel soll bevorzugt zwischen > 0 und < 90°, bevorzugt zwischen 30 und 50°, betragen.

Gemäß einer Ausführungsform sind die Auslassöffnungen der Auslasskanäle im gleichen Winkel zur Querschnittsebene des Auslasskanals geneigt. Zum einen vereinfacht sich hierdurch die Herstellung, zum anderen erfolgt bei allen Auslasskanälen eine gleichartige Ablenkung, die zu einem definierten Gesamtstrahl führt.

Von Vorteil ist es insbesondere, wenn die Neigungswinkel der Auslassöffnungen der Auslasskanäle den gleichen Scheitelpunkt aufweisen. Hierdurch wird eine Zusammenführung der Teilstrahle entlang einer gemeinsamen durch den Scheitelpunkt verlaufenden Strömungsachse bewirkt. Die Wandungsbereiche der Auslasskanäle, die der Strömungsachse am nächsten liegen, sind weiter heruntergezogen, als die gegenüberliegenden Wandungsbereiche, wodurch die Teilstrahle weiter außen schneller an der Kanalwandung abreißen als an dem der Strömungsachse näher liegenden Wandungsabschnitt.

Eine besonders günstige Ausführungsform sieht vor, dass die Auslasseinrichtung eine zumindest bereichsweise kegel- oder kugelabschnittsförmige Endfläche aufweist und die Auslasskanäle zum Ausbilden der Auslassöffnung den kegel- oder kugelförmigen Abschnitt der Endfläche schneiden. Die Auslasskanäle werden hierdurch quasi schräg abgeschnitten, so dass sich die gewünschte Form der Auslassöffnungen ergibt. Eine Kegel- oder Kugelform lässt sich sehr einfach erzeugen und verstärkt noch das Zusammenführen der Teilstrahle zu einem Gesamtstrahl.

Um die Schaumwirkung zusätzlich zur Mischkammer noch einmal zu verstärken, kann stromabwärts zur Mischkammer eine Schäumkammer mit einer quer zur Strömungsrichtung angeordneten Prallplatte vorgesehen sein. Das bedeutet, dass das aus der Mischkammer ausströmende Gemisch, insbesondere in Strahlform, gegen eine Prallplatte gespritzt wird und es in der der Prallplatte zugeordneten Schäumkammer zu einem verstärkten Aufschäumen des Gemischs kommt. Der Dampf-Luft-Milchschaum wird hierdurch besonders cremig.

Damit der cremige Schaum möglichst unbeeinträchtigt an seinen Bestimmungsort gelangen kann, sind bei einer weiteren Variante die Einlassöffnungen der Auslasskanäle in der Prallplatte angeordnet. Bevorzugt erfolgt eine Gruppierung der Einlassöffnung der Auslasskanäle um die eigentliche Prallstelle herum.

Günstigerweise befindet sich zwischen der Mischkammer und der Schäumkammer ein Düsenkanal. Dieser Düsenkanal sorgt dafür, dass der Milchschaum als Strahl mit relativ hoher Geschwindigkeit aus dem Düsenkanal austritt und auf die Prallplatte trifft.

Verstärkt wird die Aufschäumung in der Schäumkammer noch dadurch, dass gemäß einer weiteren Ausgestaltung sich der Düsenkanal in Strömungsrichtung zumindest abschnittsweise im Querschnitt verkleinert. Hierdurch nimmt der Schaumstrahl Geschwindigkeit auf und der Auftreffimpuls auf die Prallplatte wird verstärkt.

Zur konstruktiven Vereinfachung kann die Auslasseinrichtung eine Aufsteckhülse umfassen, die auf einem in stromabwärts zur Mischkammer angeordneten Aufsteckstutzen aufgesteckt ist, die die Schäumkammer seitlich begrenzt und die am unteren Ende die Prallplatte mit den Auslasskanälen aufweist. Hierdurch lässt sich der untere Teil sehr einfach entfernen und reinigen, da ein sofortiger Zugang zur Schäumkammer bereitgestellt ist. Darüber hinaus lässt sich eine solche Aufsteckhülse günstig, insbesondere durch Spritzgusstechnik, herstellen.

Bevorzugt kann in dem Aufsteckstutzen der Düsenkanal angeordnet sein. Aufgrund dieser Anordnung entsteht eine automatische Zentrierung. Darüber hinaus stellt der Aufsteckstutzen zwei Funktionen bereit. Zum einen eine ausreichende Länge zur Ausbildung des Düsenkanals und zum anderen eine ausreichende Länge zum Aufstecken der Aufsteckhülse.

Sehr gute Aufschäumergebnisse wurden gemäß einer Variante erzielt, wenn ein Abstand zwischen dem Auslass der Düsenkanals und der Prallplatte dem 2,5- bis 5-fachen des Durchmessers des Auslasses des Düsenkanals entspricht.

Im Folgenden wird ein Ausführungsbeispiel der vorliegenden Erfindung anhand einer Zeichnung näher erläutert. Es zeigen:
- Fig. 1: einen Milchaufschäumer im Vollschnitt,
- Fig. 2: den Milchaufschäumer aus Fig. 1 in einer Draufsicht,
- Fig. 3: den Milchaufschäumer entlang der Linie III-III aus Fig. 2 geschnitten,
- Fig. 4: eine Schnittdarstellung entlang der Linie IV-IV aus Fig. 3 geschnitten,
- Fig. 5: eine Aufsteckhülse in einer vergrößerten Vorderansicht,
- Fig. 6: die Aufsteckhülse aus Fig. 5 im Vollschnitt,
- Fig. 7: eine Unteransicht der Aufsteckhülse aus Fig. 5 und
- Fig. 8: eine perspektivische Darstellung des Schlauchanschlusses aus Fig. 1 in vergrößerter Darstellung.

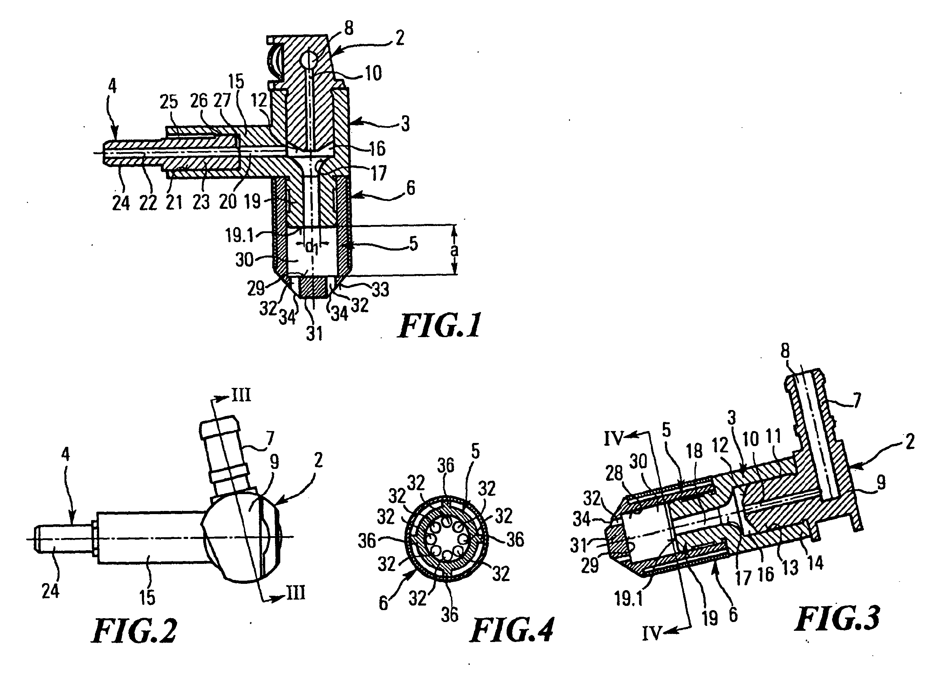

Die in den Fig. 1 bis 4 im zusammengebauten Zustand gezeigte Milchaufschäumvorrichtung 1 umfasst im wesentlichen fünf voneinander trennbare Bauteile. Bei den fünf Bauelementen handelt es sich um die Dampfzuleitung 2, das Mischkammerteil 3, den Milchschlauchadapter 4, die Aufsteckhülse 5 und die Schutzhülse 6.

Die Dampfzuleitung 2 weist einen Einsteckabschnitt 7, mit dem die Dampfzuleitung 2 dichtend in den Dampfauslass einer Kaffeemaschine (nicht dargestellt) eingesteckt wird. Der Einsteckabschnitt 7 weist eine sich längs durch diesen erstreckende Dampfzuleitungsbohrung 8 auf, die in einem Mittelteil 9 endet und von der eine im Querschnitt kleinere Mischkammerzuleitung 10 im rechten Winkel abzweigt. Die Mischkammerzuleitung 10 erstreckt sich durch einen Steckansatz 11, der sich rechtwinklig zum Einsteckabschnitt 7 vom Mittelteil 9 wegerstreckt. Die Stirnseite 12 des Steckansatzes 11 ist kegelstumpfförmig ausgestaltet und in deren Zentrum endet die Mischkammerzuleitung 10. Die Dampfzuleitung 2 ist aus einem festen Kunststoff hergestellt, der der Hitze des einströmenden Dampfes widerstehen kann.

Der Steckansatz 11 ist in eine zylindrische Mischkammerbohrung 13 des Mischkammerteils 3 dichtend eingesteckt. Die Mischkammerbohrung 13 ist in einem Hülsenabschnitt 14 des Mischkammerteils 3 angeordnet, von dem rechtwinklig ein Einsteckansatz 15 zur Aufnahme des Milchschlauchadapters 4 wegführt. Unterhalb des Steckansatzes 11 ist in dem Hülsenabschnitt 14 die Mischkammer 16 gebildet, deren Boden 17 trichterförmig ausgestaltet ist und in einen sich weiter verjüngenden Düsenkanal 18 übergeht. Der Düsenkanal 18 befindet sich in einem dichtend in die Aufsteckhülse 5 eingesteckten Steckabschnitt 19. Der Einsteckansatz 15 weist einen Zuleitungskanal 20 auf, der seitlich in die Mischkammer 16 ungefähr auf Höhe der Auslassöffnung der Mischkammerzuleitung 10 mündet. Der Strömungsquerschnitt des Zuleitungskanals 20 ist etwas größer als der Strömungsquerschnitt der Mischkammerzuleitung 10. Am Ende des Steckansatzes 15 befindet sich eine Einsteckbohrung 21 für den Milchschlauchadapter 4. Das Mischkammerteil 3 besteht aus einem elastischen Werkstoff, z.B. einem Silikon.

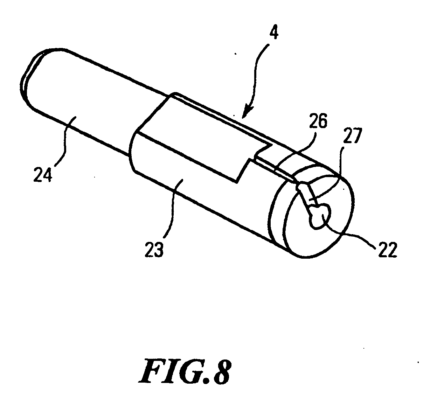

Der Milchschlauchadapter 4 wird nunmehr unter Zuhilfenahme der Fig. 8 näher erläutert. Der Milchschlauchadapter 4 weist eine mittig sich durch diesen erstreckende Milchleitung 22 auf, die mit dem Zuleitungskanal 20 fluchtet. Der vordere größere zylindrische Abschnitt 23 ist in die Einsteckbohrung 21 des Einsteckansatzes 15 eingesteckt, so dass die Stirnseite des Milchschlauchadapters 4 plan an dem Bohrungsgrund der Einsteckbohrung 21 anliegt. Ein im Querschnitt kleinerer Zylinderansatz 24 dient zum Aufstecken eines Milchzuleitungsschlauchs (nicht dargestellt). Der zylindrische Abschnitt 23 ist an einer Seite abgeflacht, so dass zwischen dem zylindrischen Abschnitt 23 und der Einsteckbohrung 21 ein Hohlraum 25 entsteht. An diesem Hohlraum 25 schließt sich ein kleiner Luftkanal 26 an, der in einen Verbindungskanal 27 an der Stirnseite übergeht. Der Verbindungskanal 27 verbindet den Luftkanal 26 mit der Milchleitung und dem Zuleitungskanal 20. Der Milchschlauchadapter 4 besteht aus einem festen Kunststoff.

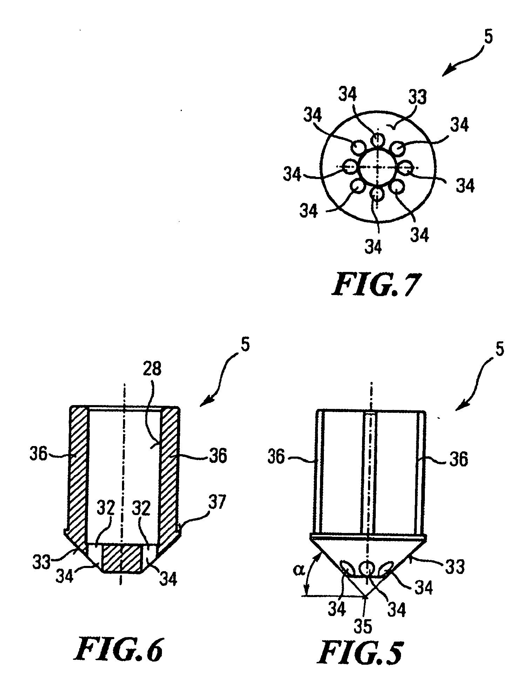

Die Aufsteckhülse 5 wird mittels einer Hülsenbohrung 28 auf den Steckabschnitt 19 aufgeschoben (siehe auch Fig. 5 bis 7). Zwischen der Stirnseite 19.1 des Steckabschnitts 19 und einer Bodenfläche 29 der Hülsenbohrung 28 ist eine Aufschäumkammer 30 gebildet. Die Bodenfläche 29 wird durch eine Prallplatte 31 geformt. Der mittlere Teil der Prallplatte 31 ist geschlossen, während an ihrem Randbereich mehrere gleichmäßig verteilt angeordnete (im vorliegenden Fall acht) Auslasskanäle 32 angeordnet sind. Die Auslasskanäle 32 erstrecken sich sämtlich parallel zueinander und parallel zur Achse der Aufsteckhülse 5. Die Stirnfläche 33 der Aufsteckhülse 5 ist kegelstumpfförmig ausgestaltet, wobei die Auslasskanäle 32 in der Mantelfläche des Kegelstumpfes enden und somit eine in einem Winkel α geneigte Auslassöffnungen 34 aufweisen. Hierdurch erhalten die Auslassöffnungen 34 eine annähernd elliptische Form in der Seitenansicht (siehe Fig. 5). Das bedeutet auch, dass auf der einen Seite, die näher zur Achse der Aufsteckhülse 5 liegt, die Wandung der Auslasskanäle 32 länger ist als auf der gegenüberliegenden Seite. Aufgrund der Tatsache, dass der Kegelstumpf gleichmäßig ausgeformt ist, weisen sämtliche Auslassöffnungen 34 den gleichen Neigungswinkel α und einen gemeinsamen Scheitelpunkt 35 auf. Der Neigungswinkel α beträgt im vorliegenden Fall ca. 45° (bevorzugt 30 - 60°). Der Abstand a zwischen der Stirnseite 19.1 des Steckabschnitts 19 und der Bodenfläche 29 beträgt im vorliegenden Fall das 3,4-fache des Durchmessers d₁ der Auslassöffnung des Düsenkanals 18 (bevorzugt beträgt der Abstand a das 2,5 bis 5-fache des Durchmessers d₁).

Auf der Mantelfläche der Aufsteckhülse 5 sind vier Rippen 36 angeordnet, auf denen die aus Edelstahl bestehende Schutzhülse 6 aufgesteckt ist und durch einen umlaufenden Bund 37 gehalten ist. Die Aufsteckhülse 5 besteht aus einem festen Kunststoff. Die Rippen 36 minimieren den Wärmeübergang von der Aufsteckhülse 5 zur Schutzhülse 6, um die Montage zu erleichtern. Die Dampfzuleitung 2, der Milchschlauchadapter 4 und die Aufsteckhülse 5 können z.B. aus PPGF-20 hergestellt werden, während das Mischkammerteil 3 aus Silikon 70 Shore A bestehen kann.

Im Folgenden wird die Wirkungs- und Funktionsweise der vorliegenden Erfindung anhand des oben beschriebenen Ausführungsbeispiels näher erläutert.

Durch die Dampfzuleitung 2 wird Dampf zugeführt, so dass dieser durch die Mischkammerzuleitung 10 in die Mischkammer 16 einströmt. Durch den Venturi-Effekt entsteht ein Unterdruck, so dass nunmehr Milch über die Milchleitung 22 und den Zuleitungskanal 20 angesaugt wird. Gleichzeitig wird Luft über den Hohlraum 25, den Luftkanal 26 und den Verbindungskanal 27 der Milch zugeführt, so dass im Zuleitungskanal 20 ein Luft-Milch-Gemisch vorliegt und in die Mischkammer 16 einströmt. In der Mischkammer 16 vermischt sich das Luft-Milch-Gemisch mit dem Dampf. Das Dampf-Milch-Luft-Gemisch verlässt dann über den Düsenkanal 18, in dem es beschleunigt wird, die Mischkammer 16 und wird in die Aufschäumkammer 30 eingespritzt. Das bedeutet, dass das Dampf-Milch-Luft-Gemisch als Strahl in diese Aufschäumkammer 30 eintritt, der gegen die Prallplatte 31 gerichtet ist. Durch das Auftreffen auf die Prallplatte 31 entsteht eine intensivere Aufschäumung, so dass ein sehr cremiger Milchschaum durch die Auslasskanäle 32 ausströmen kann.

Aufgrund der Tatsache, der geneigt verlaufenden Auslassöffnungen und somit der schräg verlaufenden Auslasskante, haftet der durch die Auslasskanäle 32 ausströmende Milchschaum auf der einen Seite der Auslasskanäle 32 länger an der Wandung an als auf der gegenüberliegenden Seite. In den außen liegenden Bereichen der Prallplatte 31 reißt somit der Milchschaum früher an den Auslasskanälen 32 ab als weiter innen liegend. Hierdurch erfahren die Milchschaumteilstrahle, die aus den Auslasskanälen 32 austreten, eine gewisse Ablenkung zur Achse der Aufsteckhülse 5 hin. Verstärkt wird dieser Effekt noch durch die konische Ausgestaltung der Stirnseite 33. Obwohl die Auslasskanäle 32 relativ kurz sind, wird durch deren Ausgestaltung erreicht, dass die Teilströme zu einem gemeinsamen Milchschaumstrom mittig an der Stirnseite 33 der Aufsteckhülse 5 zusammengeführt werden. Die Länge der Auslasskanäle 32 beträgt demnach nur ca. 1/6 der Gesamtstrecke von der Mischkammer 16 bis zur Stirnseite 33 (bevorzugt weniger als die Hälfte oder weiter bevorzugt weniger als 1/4 dieser Strecke). Das Verhältnis zwischen dem Durchmesser der Auslasskanäle 32 zu deren Länge beträgt ca. 1:2,5 (bevorzugt höchstens 1:8 oder bevorzugt höchstens 1:4).

Der sich ausbildende Milchschaumstrom kommt gleichmäßig aus dem Ende der Aufsteckhülse 5 heraus und es werden im Wesentlichen keine Spritzer verursacht.

## Patentansprüche

1. Milchaufschäumvorrichtung (1) mit einer Mischkammer (16), die stromabwärts einer Dampfzuleitung (2) angeordnet ist und die mit einer Milch- und/oder Milch-Luft-Zuleitung (4) in Verbindung steht, und einer stromabwärts der Mischkammer (16) angeordneten Auslasseinrichtung (5) für das Gemisch, die mehrere Auslasskanäle (32) aufweist, **dadurch gekennzeichnet, dass** die Auslassöffnungen (34) der Auslasskanäle (32) in einem Winkel (α) zur Querschnittsebene des Auslasskanals (32) geneigt sind und dass die Neigungswinkel (α) der Auslassöffnungen (34) der Auslasskanäle (32) den gleichen Scheitelpunkt (35) aufweisen.

2. Milchaufschäumvorrichtung (1) nach Anspruch 1, **dadurch gekennzeichnet, dass** die Auslassöffnungen (34) der Auslasskanäle (32) in gleichem Winkel (α) zur Querschnittsebene des Auslasskanals (32) geneigt sind.

3. Milchaufschäumvorrichtung (1) nach einem der vorangegangenen Ansprüche, **dadurch gekennzeichnet, dass** die Auslasseinrichtung (5) eine zumindest bereichsweise kegel- oder kugelabschnittsförmige Endfläche (33) aufweist und die Auslasskanäle (32) zum Ausbilden der Auslassöffnung (34) den kegel- oder kugelförmigen Abschnitt der Endfläche (33) schneiden.

4. Milchaufschäumvorrichtung (1), nach einem der vorangegangenen Ansprüche, **dadurch gekennzeichnet, dass** stromabwärts zur Mischkammer (16) eine Schäumkammer (30) mit einer quer zur Strömungsrichtung angeordneten Prallplatte (31) angeordnet ist.

5. Milchaufschäumvorrichtung (1) nach Anspruch 4, **dadurch gekennzeichnet, dass** die Einlassöffnungen der Auslasskanäle (32) in der Prallplatte (31) angeordnet sind.

6. Milchaufschäumvorrichtung (1) nach Anspruch 4 oder 5, **dadurch gekennzeichnet, dass** zwischen der Milchkammer (16) und der Aufschäumkammer (30) ein Düsenkanal (18) angeordnet ist.

7. Milchaufschäumvorrichtung (1) nach Anspruch 6, **dadurch gekennzeichnet, dass** sich der Düsenkanal (18) in Strömungsrichtung zumindest abschnittsweise im Querschnitt verkleinert.

8. Milchaufschäumvorrichtung (1) nach einem der vorangegangenen Ansprüche, **dadurch gekennzeichnet, dass** die Auslasseinrichtung eine Aufsteckhülse (5) umfasst, die auf einen stromabwärts zur Mischkammer (16) angeordneten Aufsteckstutzen (19) aufgesteckt ist, die die Aufschäumkammer (30) seitlich begrenzt und die am unteren Ende die Prallplatte (31) mit den Auslasskanälen (32) aufweist.

9. Milchaufschäumvorrichtung (1) nach Anspruch 8, **dadurch gekennzeichnet, dass** in dem Aufsteckstutzen (19) der Düsenkanal (18) angeordnet ist.

10. Milchaufschäumvorrichtung (1) nach Anspruch 9, **dadurch gekennzeichnet, dass** ein Abstand (a) zwischen dem Auslass des Düsenkanals (18) und der Prallplatte (31) dem 2,5 bis 5-fachen des Durchmessers (d₁) des Auslasses des Düsenkanals (18) entspricht.

## Claims

1. Milk foaming device (1) with a mixing chamber (16), which is arranged downstream of a steam supply pipe (2) and is connected to a milk and / or milk/air supply pipe (4), and a discharge device (5) for the mixture arranged downstream of the mixing chamber (16), which has a number of discharge channels (32), **characterized in that** the discharge openings (34) of the discharge channels (32) are sloped at an angle (α) to the cross-sectional plane of the discharge channel (32) and that the slope angles (α) of the discharge openings (34) of the discharge channels (32) have the same vertex (35).

2. Milk foaming device (1) according to Claim 1, **characterized in that** the discharge openings (34) of the discharge channels (32) are sloped at the same angle (α) to the cross-sectional plane of the discharge channel (32).

3. Milk foaming device (1) according to one of the preceding Claims, **characterized in that** the discharge device (5) has an at least regionally truncated conical or spherical end area (33) and the discharge channels (32) for forming the discharge opening (34) intersect the conical or spherical section of the end area (33).

4. Milk foaming device (1) according to one of the preceding Claims **characterized in that** a foaming chamber (30) is arranged downstream of the mixing chamber (16) with a baffle (31) arranged transverse to the flow direction.

5. Milk foaming device (1) according to Claim 4, **characterized in that** the inlet openings of the discharge channels (32) are arranged in the baffle (31).

6. Milk foaming device (1) according to Claim 4 or 5, **characterized in that** a nozzle channel (18) is arranged between the milk chamber (16) and the foaming chamber (30).

7. Milk foaming device (1) according to Claim, 6, **characterized in that** the nozzle channel (18) is reduced in cross-section in the direction of flow at least in sections.

8. Milk foaming device (1) according to one of the preceding Claims, **characterized in that** the discharge device comprises a plug-on sleeve (5), which is plugged onto a plug-on connection piece (19) arranged downstream of the mixing chamber (16), which borders the foaming chamber (30) to the side and which has the baffle (31) with the discharge channels (32) at the lower end.

9. Milk foaming device (1) according to Claim 8, **characterized in that** the nozzle channel (18) is arranged in the plug-on connecting piece (19).

10. Milk foaming device (1) according to Claim 9, **characterized in that** a distance (a) between the outlet of the nozzle channel (18) and the baffle (31) corresponds to 2.5 to 5 times the diameter (d₁) of the outlet of the nozzle channel (18).

## Revendications

1. Dispositif pour émulsifier du lait (1) avec une chambre de mélange (16), qui est agencée en aval d'une conduite d'alimentation en vapeur (2) et qui est en relation avec une conduite d'alimentation en lait et/ou lait-air (4), et un dispositif de sortie (5) agencé en aval de la chambre de mélange (16) pour le mélange, qui présente plusieurs canaux de sortie (32), **caractérisé en ce que** les ouvertures de sortie (34) des canaux de sortie (32) sont inclinées selon un angle (α) par rapport au plan de la section transversale du canal de sortie (32) et **en ce que** les angles d'inclinaison (α) des ouvertures de sortie (34) des canaux de sortie (32) ont le même sommet (35).

2. Dispositif pour émulsifier du lait (1) selon la revendication 1, **caractérisé en ce que** les ouvertures de sortie (34) des canaux de sortie (32) sont inclinées selon le même angle (α) par rapport au plan de la section transversale du canal de sortie (32).

3. Dispositif pour émulsifier du lait (1) selon l'une quelconque des revendications précédentes, **caractérisé en ce que** le dispositif de sortie (5) présente une surface terminale (33) au moins localement en forme de segment sphérique ou conique et les canaux de sortie (32) pour la formation de l'ouverture de sortie (34) coupent le segment conique ou sphérique de la surface terminale (33).

4. Dispositif pour émulsifier du lait (1) selon l'une quelconque des revendications précédentes, **caractérisé en ce qu'**une chambre d'émulsion (30) avec une plaque d'impact (31) agencée transversalement au sens d'écoulement est disposée en aval de la chambre de mélange (16).

5. Dispositif pour émulsifier du lait (1) selon la revendication 4, **caractérisé en ce que** les ouvertures d'entrée des canaux de sortie (32) sont agencées dans la plaque d'impact (31).

6. Dispositif pour émulsifier du lait (1) selon la revendication 4 ou 5, **caractérisé en ce qu'**un canal d'écoulement (18) est agencé entre la chambre de lait (16) et la chambre d'émulsion (30).

7. Dispositif pour émulsifier du lait (1) selon la revendication 6, **caractérisé en ce que** la section transversale du canal d'écoulement (18) diminue dans le sens d'écoulement au moins par tronçon.

8. Dispositif pour émulsifier du lait (1) selon l'une quelconque des revendications précédentes, **caractérisé en ce que** le dispositif de sortie comprend une douille à rapporter (5), qui est montée sur une tubulure à rapporter (19) agencée en aval de la chambre de mélange (16), qui délimite la chambre d'émulsion (30) sur le côté et qui présente au niveau de l'extrémité inférieure la plaque d'impact (31) avec les canaux de sortie (32).

9. Dispositif pour émulsifier du lait (1) selon la revendication 8, **caractérisé en ce que** le canal d'écoulement (18) est agencé dans la tubulure à rapporter (19).

10. Dispositif pour émulsifier du lait (1) selon la revendication 9, **caractérisé en ce qu'**une distance (a) entre la sortie du canal d'écoulement (18) et la plaque d'impact (31) correspond à 2,5 à 5 fois le diamètre (d₁) de la sortie du canal d'écoulement (18).
